# FASCICULE DE BREVET EUROPEEN

(11) **EP 1 436 694 B1**
(45) Date de publication et mention de la délivrance du brevet: **04.05.2005**
(21) Numéro de dépôt: 02801366.2
(22) Date de dépôt: 11.10.2002
(51) Int. Cl.: G06F 9/355

(54) **MICROPROCESSEUR DISPOSANT D'UN ESPACE ADRESSABLE ETENDU**
MIKROPROZESSOR MIT ERWEITERTEM ADRESSIERBAREM SPEICHERRAUM
MICROPROCESSOR HAVING AN EXTENDED ADDRESSABLE MEMORY SPACE

(30) Priorité: 19.10.2001 FR 0113478
(43) Date de publication de la demande: 14.07.2004
(73) Titulaire: STMicroelectronics S.A., 92120 Montrouge (FR)
(72) Inventeur: ROCHE, Franck, F-13530 Trets (FR); BASSET, Philippe, F-38240 Meylan (FR)
(74) Mandataire: Marchand, André
(86) Numéro de dépôt international: PCT/FR2002/003481
(87) Numéro de publication internationale: WO 2003/034204

(56) Documents cités:
- EP-A- 0 530 682
- WO-A-00/55723
- US-A- 5 566 308

## Description

La présente invention concerne les microprocesseurs et plus particulièrement les mécanismes d'accès à la mémoire adressable par les microprocesseurs.

Les mémoires utilisées par les microprocesseurs ou les microcontrôleurs comprennent généralement une pluralité d'emplacements mémoire, chaque emplacement pouvant être utilisé pour stocker une donnée. Pour accéder à un emplacement mémoire en lecture ou en écriture, le microprocesseur doit générer une adresse correspondant à l'emplacement mémoire et l'envoyer sur un bus d'adresse reliant le microprocesseur à la mémoire. Il apparaît donc qu'une adresse mémoire doit être constituée d'un nombre de bits suffisant pour identifier de manière unique chaque emplacement mémoire accessible par le microprocesseur. Par exemple, une mémoire de 64 kilo-octets nécessite 16 bits d'adresse pour que chaque emplacement de cette mémoire puisse être identifié de manière unique.

Comme la taille des mémoires tend à augmenter à coût constant, on cherche à augmenter la taille de l'espace adressable accessible par le microprocesseur. Pour ce faire, il faut doter le microprocesseur d'un bus d'adresse ayant un nombre de lignes correspondant, ce qui entraîne inévitablement une augmentation de la complexité du microprocesseur tant au niveau de sa structure que de son registre de commandes.

Pour augmenter l'espace adressable par un microprocesseur sans toutefois augmenter notablement sa structure, on a déjà proposé d'intégrer dans l'unité de traitement du microprocesseur un registre de page ou de segment contenant les bits de poids fort supplémentaires qui sont concaténées avec les adresses générées par le microprocesseur pour augmenter l'espace adressable par ce dernier. WO 00 55 723 décrit un tel microprocesseur fournissant une adresse étendue obtenue par la concaténation d'une adresse linéaire avec un sélecteur de segment ou par la concaténation des contenus de deux registres.

Toutefois, cette solution nécessite d'ajouter au registre de commandes du microprocesseur des commandes supplémentaires pour gérer le registre de page ou de segment. En outre, cette solution conduit à une division de l'espace adressable par le microprocesseur en blocs relativement étanches et introduit des contraintes supplémentaires au niveau des compilateurs.

Une autre solution consiste à utiliser des index qui sont ajoutés aux adresses manipulées par l'unité de traitement du microprocesseur. Il en résulte des traitements supplémentaires assez lourds pour une augmentation de l'espace adressable relativement limitée.

L'invention a pour objectif un microprocesseur ne présentant pas ces inconvénients, mais restant compatible avec les microprocesseurs ne présentant pas cette possibilité d'adressage étendu, de manière à ne pas avoir à modifier les programmes existants.

Cet objectif est atteint par la prévision d'un microprocesseur comprenant une unité de traitement, des moyens de connexion et d'accès à un espace mémoire adressable, et des moyens pour exécuter les instructions d'un jeu d'instructions comprenant des instructions d'accès à l'espace mémoire.

Selon l'invention, l'espace mémoire adressable par le microprocesseur comprend une zone mémoire basse et une zone mémoire étendue, en ce que le jeu d'instructions comprend un premier ensemble d'instructions comportant des instructions d'accès à la zone mémoire basse, et un second ensemble d'instructions, distinct du premier ensemble d'instructions, et regroupant toutes les instructions donnant accès à la zone mémoire étendue du jeu d'instructions, et en ce que le microprocesseur comprend des moyens pour empêcher tout accès à la zone mémoire étendue tant que le microprocesseur exécute des instructions du premier ensemble d'instructions.

Selon un mode de réalisation de l'invention, chaque emplacement de l'espace mémoire est associé à une adresse respective d'accès, et en ce que le microprocesseur comprend des moyens pour forcer l'adresse d'un emplacement à accéder pour que celle-ci pointe sur un emplacement de la zone mémoire basse, lors de l'exécution d'instructions du premier ensemble d'instructions.

Avantageusement, le second ensemble d'instructions comprend uniquement des instructions de saut et d'appel de sous-programme à un emplacement mémoire quelconque de l'ensemble de l'espace mémoire, et des instructions de transfert de données entre un emplacement mémoire quelconque de l'ensemble de l'espace mémoire et un registre interne prédéfini du microprocesseur.

De préférence, chaque emplacement de l'espace mémoire est associé à une adresse respective d'accès, et en ce que pour l'exécution d'instructions de saut ou d'appel de sous-programme du premier ensemble d'instructions, en mode d'adressage direct à partir d'un emplacement en zone mémoire basse, le microprocesseur comprend des moyens pour maintenir l'adresse de l'emplacement de destination du saut pour que celle-ci pointe sur un emplacement de la zone mémoire basse.

Selon un mode de réalisation de l'invention, le premier ensemble d'instructions comprend des instructions d'adressage en mode indirect pour accéder à un emplacement de la zone mémoire basse, le microprocesseur comprenant des moyens pour forcer l'adresse et la valeur d'un pointeur spécifiant un accès en mode indirect pour que celui-ci soit situé en zone mémoire basse et pointe dans cette zone.

Alternativement, le second ensemble d'instructions comprend des instructions d'accès à la zone mémoire étendue en mode d'adressage indirect.

De préférence, en mode d'adressage indirect dans la zone mémoire étendue, les pointeurs déterminant l'adresse de l'emplacement mémoire à accéder sont situés dans la zone mémoire basse.

Avantageusement, en mode d'adressage indirect dans la zone mémoire étendue, les pointeurs déterminant l'adresse de l'emplacement mémoire à accéder sont situés dans la zone mémoire étendue.

Selon un mode de réalisation de l'invention, le microprocesseur comprend un bus d'adresse conçu pour accéder à l'ensemble de l'espace adressable, et un registre de pointeur de programme dont la taille correspond à celle du bus d'adresse pour pouvoir accéder à une instruction de programme à exécuter située à n'importe quel emplacement de l'espace adressable.

Selon un mode de réalisation de l'invention, la zone mémoire basse est accessible sur 16 bits et la zone mémoire étendue est accessible sur 24 bits.

Ces objets, caractéristiques et avantages ainsi que d'autres de la présente invention seront exposés plus en détail dans la description suivante d'un microprocesseur, faite à titre non limitatif en relation avec les figures jointes dans lesquelles :
La figure 1 représente schématiquement les fonctions d'adressage de l'unité de traitement d'un microprocesseur selon l'invention ;
La figure 2 montre plus en détail sous la forme d'un circuit logique, la fonction d'adressage d'une donnée en mémoire, par l'unité de traitement représentée sur la figure 1 ;
La figure 3 montre plus en détail sous la forme d'un circuit logique, la fonction de détermination de la valeur du pointeur de programme, dans l'unité de traitement représentée sur la figure 1 ;
Les figures 4 à 6 montrent plus en détail sous la forme de circuits logiques, trois variantes de la fonction permettant de déterminer la valeur d'un pointeur utilisé en mode d'adressage indirect, dans l'unité de traitement représentée sur la figure 1.

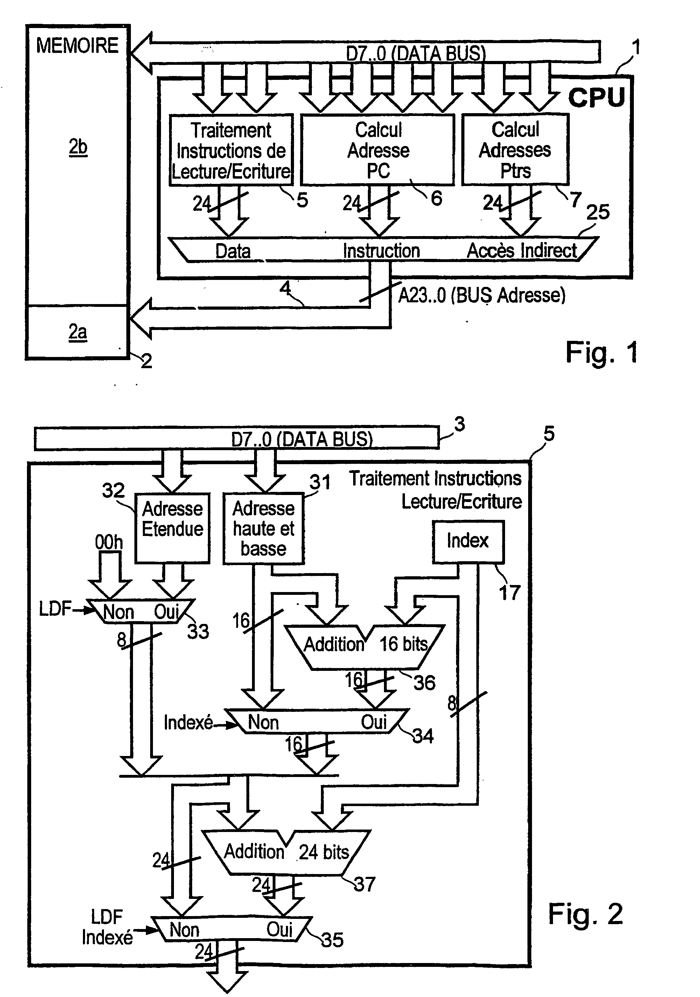

L'unité de traitement 1 de microprocesseur représentée sur la figure 1, est reliée, par l'intermédiaire d'un bus d'adresse 4 et d'un bus de données 3, à un espace mémoire adressable, symbolisé par une mémoire 2 contenant au moins une zone mémoire programme et une zone mémoire de données réparties dans une zone mémoire basse 2a et une zone mémoire étendue 2b. Sur cette figure, sont représentées sous là forme de blocs les principales fonctions d'adressage réalisées par l'unité de traitement, à savoir une fonction d'adressage 5 pour accéder en lecture ou en écriture à la mémoire de données, une fonction 6 permettant de déterminer la valeur du pointeur de programme durant l'exécution d'un programme par le microprocesseur, et une fonction 7 pour déterminer la valeur de pointeurs utilisés dans les modes d'adressage indirects. Les adresses déterminées par les fonctions 5, 6, 7 sont appliquées à un multiplexeur 25 qui sélectionne l'une de ces sorties en fonction de l'instruction de programme en cours d'exécution.

La figure 2 représente la fonction 5 permettant de déterminer une adresse mémoire en vue de transférer des données entre la zone mémoire de données et les registres internes du microprocesseur. A cet effet, l'unité de traitement 1 comprend d'une manière classique un registre 31 sur deux octets (16 bits), destiné à recevoir l'adresse de la donnée à lire ou écrire en mémoire, cette adresse étant lue en mémoire programme en association avec le code d'instruction de transfert. Le contenu du registre 31 est appliqué en sortie de la fonction 5.

Selon l'invention, l'espace adressable par le microprocesseur 1 est étendu en augmentant la taille du bus d'adresse 4 pour le faire passer par exemple de 16 à 24 bits (trois octets), de manière à accéder non seulement à une zone mémoire basse 2a (de 000000h à 00FFFFh), mais également à une zone mémoire étendue 2b (de 010000h à FFFFFFh), et en introduisant dans le jeu d'instructions du microprocesseur des modes d'adressage étendus accessibles uniquement à un nombre limité d'instructions. Ces instructions sont par exemple des instructions de saut "JUMP" et d'appel de sous-programme "CALL", et des instructions de transfert "LOAD" et "STORE" d'une donnée entre la mémoire et un registre interne au microprocesseur.

La totalité de l'espace adressable n'est donc accessible qu'à certaines instructions LDF, JPF, CALLF qui sont ajoutées au jeu d'instructions existant de manière à ce que le microprocesseur ainsi modifié reste compatible avec des programmes écrits pour un microprocesseur identique, mais ne comportant pas ces modes d'adressage étendus.

A cet effet, cette fonction 5 comprend en outre un registre 32 sur un octet, destiné à recevoir l'octet de l'adresse étendue (sur 24 bits) de l'emplacement mémoire à accéder, cet octet étant également associé au code d'instruction de transfert. La sortie du registre 32 est appliquée à l'entrée d'un multiplexeur 33 à deux entrées, dont l'autre entrée est forcée à l'octet 00. Par ailleurs, la sortie du registre 31 est appliquée en entrée d'un autre multiplexeur 34, ainsi qu'à l'entrée d'un additionneur 36 sur 16 bits, dont l'autre entrée reçoit le contenu d'un registre d'index 17 sur un octet, ceci de manière à ce que le contenu des registres 31 et 17 soit additionné pour obtenir un résultat sur deux octets. La sortie de l'additionneur 36 est reliée en entrée du multiplexeur 34, dont la sortie est concaténée avec la sortie du multiplexeur 33, de manière à former une adresse sur 3 octets, qui est appliquée à l'entrée d'un multiplexeur 35 et d'un autre additionneur 37 sur 24 bits, dont l'autre entrée reçoit le contenu du registre d'index 17 et dont la sortie est reliée en entrée du multiplexeur 35. La sortie du multiplexeur 35 correspond à la sortie de la fonction 5.

Dans le cas où l'instruction exécutée par le microprocesseur est une instruction de transfert de donnée entre la mémoire et un registre interne du microprocesseur ou entre deux emplacements de la mémoire 2, le multiplexeur 25 est commandé pour sélectionner la sortie de la fonction 5.

Lors de l'exécution d'une instruction de transfert de donnée en mode d'adressage direct non étendu, les multiplexeurs 33, 34 et 35 sont commandés de manière à fournir en sortie de la fonction 5 l'adresse contenue dans le registre 31 avec l'octet étendu forcé à 0. Lors de l'exécution d'une instruction de transfert en mode d'adressage direct étendu LDF, les multiplexeurs 33, 34 et 35 sont commandés de manière à appliquer le contenu concaténé des registres 31 et 32 en sortie de la fonction 5. En mode d'adressage indexé non étendu, le contenu du registre d'index 17 et ajouté au contenu du registre 31 par l'additionneur 36, le résultat de l'addition est sélectionné par le multiplexeur 34 dont la sortie est concaténée avec un octet nul sélectionné par le multiplexeur 33, la valeur d'adresse ainsi obtenue est appliquée en sortie de la fonction 5 par le multiplexeur 35. En mode d'adressage indexé étendu, les multiplexeurs 33 et 34 sont commandés de manière à ce que le contenu des registres 31 et 32 soient concaténés et appliqués en entrée de l'additionneur 37 pour effectuer une addition sur 24 bits avec le contenu du registre d'index 17, le multiplexeur 35 appliquant la sortie de l'additionneur 37 en sortie de la fonction 5.

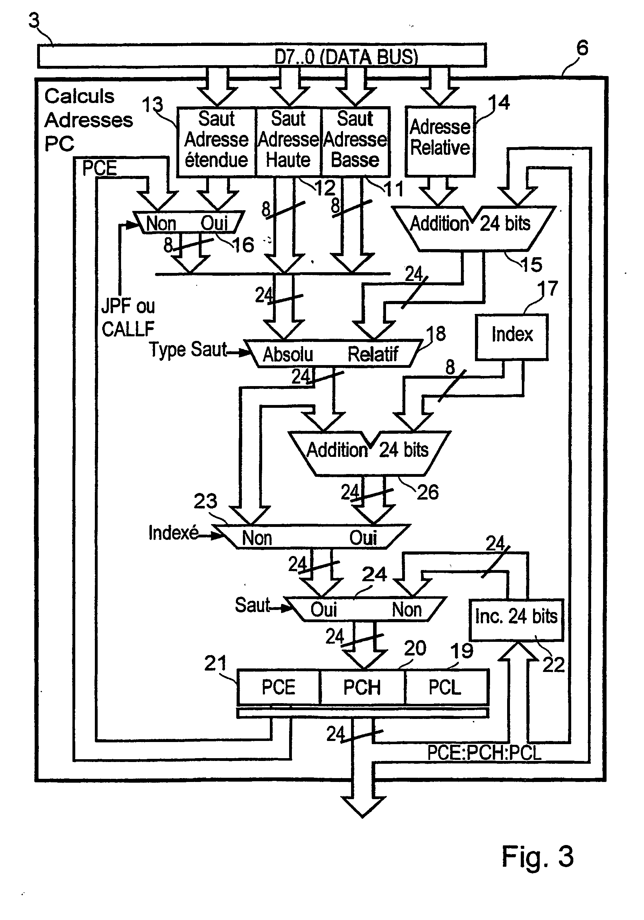

La figure 3 représente la fonction 6 de détermination de la valeur du registre contenant le pointeur de programme, c'est-à-dire l'adresse de l'instruction suivante à lire dans la mémoire programme.

Sur cette figure, l'unité de traitement comprend d'une manière classique des registres 11, 12, 14 dans lesquels sont chargées à partir du bus de données 3 les adresses de saut associées aux instructions de saut. Les registres 11, 12 sont destinés à recevoir respectivement les octets haut et bas d'une adresse de saut en mode absolu ou direct. La sortie de ces deux registres est concaténée et appliquée à un premier multiplexeur 18. Par ailleurs, la sortie du registre 14 destiné à recevoir une valeur de saut en mode d'adressage relatif, par exemple sur un octet, est reliée par l'intermédiaire d'un additionneur 15 sur 24 bits à une seconde entrée du multiplexeur 18. La sortie du multiplexeur 18 est reliée à un autre additionneur 26 sur 24 bits dont l'autre entrée est reliée au registre d'index 17. Les sorties respectives du multiplexeur 18 et de l'additionneur 26 sont reliées à un second multiplexeur 23 dont la sortie est reliée à l'entrée d'un troisième multiplexeur 24. La sortie du multiplexeur 24 est reliée à l'entrée de registres 19, 20 contenant les octets bas et haut du pointeur de programme PC, la sortie de ces registres constituant la sortie de la fonction 6. Cette sortie est rebouclée d'une part sur un incrémenteur 22 de 1 pour incrémenter la valeur du PC de manière à aller lire l'instruction suivante dans le. programme en cours d'exécution par le microprocesseur, et d'autre part sur une entrée de l'additionneur 15 de manière à ce que la valeur de saut relatif contenue dans le registre 14 puisse être ajoutée à la valeur courante du pointeur de programme.

Pour pouvoir exécuter des instructions de programme figurant dans la zone mémoire étendue 2b, et des instructions de saut ou d'appel de sous-programme JPF, CALLF dans ou vers cette zone mémoire, la fonction 6 comprend en outre un troisième registre 13 associé aux registres 11, 12 destinés à contenir une adresse de saut, le registre 13 étant destiné à contenir l'octet étendu de l'adresse de saut. La sortie de ce registre est reliée à l'entrée d'un multiplexeur 16 dont la sortie est concaténée avec la sortie des deux autres registres 11, 12 avant d'être appliquée en entrée du multiplexeur 18 dont les entrées et la sortie sont sur 24 bits. Par ailleurs, les registres contenant le pointeur de programme PC comprennent un troisième registre 21 destiné à contenir l'octet étendu du pointeur de programme, la sortie de ce registre étant d'une part concaténée avec la sortie des deux autres registres 19, 20 du PC avant d'être appliquée en sortie de la fonction 6. D'autre part, la sortie du registre 21 est connectée en entrée du multiplexeur 16. Les sorties respectives de l'incrémenteur 22 et de l'additionneur 26 sont également sur 24 bits, de manière à effectuer des opérations d'incrémentation et d'addition sur 24 bits.

Dans le cas où l'instruction exécutée n'est pas une instruction de saut, le multiplexeur 24 est commandé pour sélectionner la sortie de l'incrémenteur 22 auquel le contenu des registres PC 19, 20, 21 est appliqué, et délivrant une valeur de pointeur de programme PC incrémentée de 1 qui est insérée dans les registres 19, 20, 21, de manière à aller lire l'adresse suivante dans la zone mémoire programme. Il est à noter que dans le cas d'un ancien programme (fonctionnant avec un espace adressable sur 16 bits), la valeur du registre 21 reste à 0 en sortie de l'incrémenteur 22.

Dans le cas où l'instruction exécutée est une instruction de saut en mode d'adressage direct ou absolu, une telle instruction comprenant un code d'instruction associé à un mot d'adresse, on distingue deux cas selon que l'adresse associée est sur deux (adressage direct non étendu) ou trois octets (adressage direct étendu). En mode d'adressage direct non étendu, le multiplexeur 16 est commandé de manière à sélectionner la valeur courante du registre 21 qui est concaténée avec la sortie des deux registres 11, 12 contenant l'adresse de saut. Les multiplexeurs 18, 23 et 24 sont commandés de manière à envoyer cette adresse concaténée dans les registres 19, 20, 21 de pointeur de programme, qui est ensuite envoyée en sortie de la fonction 6.

De cette manière, lorsque le microprocesseur exécute une instruction de saut en mode direct non étendu, la valeur du registre PC étendu 21 reste inchangée, seuls les deux autres registres 19 et 20 de pointeur de programme étant modifiés et chargés à partir du bus de données 3, via les registres 11, 12.

En mode d'adressage direct étendu, le multiplexeur 16 est commandé de manière à sélectionner la sortie du registre 13 contenant l'octet étendu de l'adresse de saut, pour que celle-ci soit concaténée avec la sortie des deux autres registres 11, 12 contenant les octets bas et haut de l'adresse de saut. La valeur étendue de l'adresse de saut ainsi constituée est envoyée dans les registres 19, 20, 21 du PC, via les multiplexeurs 18, 23 et 24.

Dans le cas où l'instruction exécutée est une instruction de saut en mode d'adressage relatif, la valeur du saut contenue dans le registre 14 est ajoutée dans l'additionneur 15 à la valeur du pointeur de programme contenue dans les registres 19, 20, 21, le résultat obtenu étant sur 24 bits. Les multiplexeurs 18, 23 et 24 sont commandés de manière à appliquer la sortie de l'additionneur 15 en entrée des registres PC 19, 20, 21. Il est à noter que dans le cas d'un ancien programme, l'addition effectuée par l'additionneur 15 ne modifie pas le contenu du registre 21 qui reste à 0.'

Dans le cas où l'instruction exécutée est une instruction de saut en mode d'adressage absolu ou relatif et indexé, la valeur du registre d'index 17 est ajoutée au cours d'une addition sur 24 bits effectuée par l'additionneur 26 à l'adresse en sortie du multiplexeur 18, les multiplexeurs 23 et 24 étant commandés pour insérer l'adresse obtenue en sortie de l'additionneur 26 dans les registres PC 19, 20, 21.

Il est à noter que la taille du registre d'index 17 utilisé dans les fonctions 5 et 6 peut avantageusement être étendue de 8 à 16 bits sans modifier la structure des circuits logiques représentés sur les figures 2 et 3. Dans la figure 3, la taille de ce registre peut même être portée à 24 bits sans avoir à modifier le circuit.

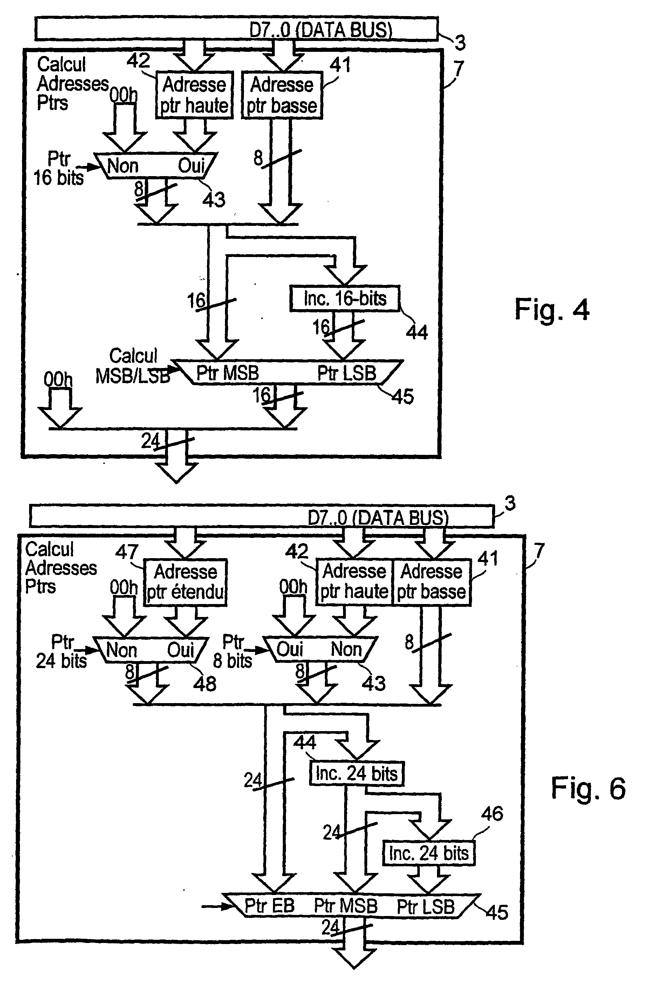

Les figures 4 à 6 représentent trois variantes de la fonction 7 qui permet d'effectuer des calculs de pointeurs, en vue de proposer des modes d'adressage indirects, les valeurs de pointeurs obtenues étant appliquées ensuite en entrée des fonctions 5 ou 6.

Dans une variante simplifiée représentée sur la figure 4, cette fonction 7 de calculs de pointeurs n'est pas modifiée par rapport aux microprocesseurs présentant un bus d'adresse sur 16 bits, ce qui implique que tous les pointeurs manipulés par le microprocesseur selon l'invention soient placés en zone mémoire non étendue 2a (adresses de 000000h à 00FFFFh). Cette fonction comprend d'une manière classique deux registres 41, 42 d'un octet dans lesquels sont insérés respectivement les octets bas et haut du pointeur à traiter. La sortie du registre d'adresse haute 42 est reliée à un multiplexeur 43 dont l'autre entrée est forcée à 00h et la sortie est concaténée avec la sortie du registre d'adresse basse 41. La valeur concaténée sur 16 bits est appliquée à un second multiplexeur 45 et à un incrémenteur 44 sur 16 bits, la sortie de l'incrémenteur étant reliée à une autre entrée du multiplexeur 44.

Selon l'invention, pour que cette fonction soit compatible avec un bus d'adresse sur 24 bits, la sortie du multiplexeur 44 sur 16 bits est concaténée avec un octet nul pour former une adresse sur 24 bits.

Dans le cas d'une adresse de pointeur sur 8 bits (située dans les 256 (2⁸) premiers octets de la mémoire adressable), le multiplexeur 43 est commandé pour concaténer le contenu du registre 41 avec un octet nul. A une première itération, le multiplexeur 45 est commandé pour envoyer en sortie de la fonction 7 l'adresse de l'octet haut du pointeur donnée par le contenu du registre 41 concaténé avec un octet nul. A la seconde itération, l'adresse de l'octet haut du pointeur est incrémentée par l'incrémenteur 44, puis envoyée en sortie de la fonction 7. Dans le cas d'une adresse de pointeur sur 16 bits, les contenus respectifs des registres 41 et 42 sont concaténés et appliqués en entrée du multiplexeur 45 et de l'incrémenteur 44.

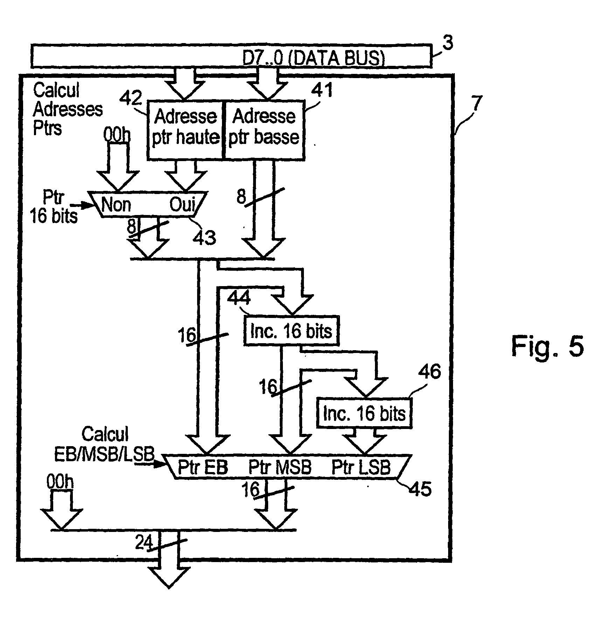

Pour charger dans les registres 11, 12, 13, les trois octets consécutifs d'un pointeur sur 24 bits, la fonction 7 représentée sur la figure 4 peut être modifiée comme cela est montré sur là figure 5. Sur cette figure, la fonction 7 comprend un autre incrémenteur 46 sur 16 bits dont l'entrée est reliée à la sortie de l'incrémenteur 44. Par ailleurs, le multiplexeur 45 comprend une troisième entrée reliée à la sortie du second incrémenteur 46. A la première itération, le multiplexeur 45 est commandé pour sélectionner l'adresse sur 16 bits de l'octet étendu du pointeur qui est fournie par les registres 41 et 42. A la seconde itération, cette adresse est incrémentée dans l'incrémenteur 44 pour calculer l'adresse de l'octet haut du pointeur, et sélectionnée par le multiplexeur 45. A la troisième itération, l'adresse de l'octet haut du pointeur est incrémentée dans l'incrémenteur 46 pour obtenir l'adresse de l'octet bas du pointeur, cette valeur étant sélectionnée par le multiplexeur 45. Ces trois adresses sur 16 bits sont successivement envoyées vers le bus d'adresse 4 après avoir été concaténées avec un octet à 00h pour être sur 24 bits.

La fonction 7 représentée sur les figures 4 et 5 permet de traiter des pointeurs se trouvant dans la zone mémoire basse 2a c'est-à-dire à une adresse sur 1 ou 2 octets. Bien entendu cette fonction peut encore être modifiée comme représenté sur la figure 6 pour pouvoir accéder à des pointeurs situés dans la mémoire étendue 2b, c'est-à-dire, à une adresse sur trois octets. Il suffit pour cela de prévoir un troisième registre 47 dans lequel l'octet étendu du pointeur est chargé à partir du bus de données 3, et un autre multiplexeur 48 permettant de sélectionner soit le contenu du registre 47, soit l'octet 00h dans le cas où le pointeur à traiter est sur 16 bits. En outre, l'incrémenteur 44 et éventuellement 46, de même que le multiplexeur 45 doivent être sur 24 bits, la sortie de ce dernier fournissant directement la sortie de la fonction 7. Les sorties respectives du registre 41 et des multiplexeurs 43 et 48 sont concaténées pour former un mot sur 24 bits, qui est envoyé sur le multiplexeur 45, puis sur l'incrémenteur 44, puis éventuellement sur l'incrémenteur 46.

Ces dispositions permettent avantageusement de pouvoir accéder à un espace adressable considérablement augmenté (multiplié par 256 si l'extension du bus d'adresse est de un octet), tout en faisant intervenir peu de codes d'instructions supplémentaires et peu de logique supplémentaire, et tout en restant compatible avec les programmes écrits pour un microprocesseur identique mais n'ayant accès qu'à un espace adressable sur 16 bits.

Pour conserver la compatibilité avec les programmes écrits pour un espace adressable limité à la zone mémoire basse 2a, il suffit de conserver la table des vecteurs d'interruption, et en particulier le vecteur d'interruption de reset dans la zone mémoire basse, et maintenir les routines d'interruption sur lesquelles pointent les vecteurs d'interruption, dans cette zone mémoire. De cette manière, le registre PC étendu 21 est à 00h au démarrage du microprocesseur et conserve cette valeur tant que l'on n'exécute pas les instructions JPF ou CALLF.

Dans le cas où le microprocesseur selon l'invention rencontre dans un tel programme, une instruction d'accès à une donnée en mode d'adressage direct, la partie étendue de l'adresse de la donnée est forcée à 0 par le multiplexeur 33 de la figure 2. Dans le cas où le microprocesseur rencontre une instruction de saut ou d'appel de sous-programme non étendu, le multiplexeur 16 (figure 3) est commandé de manière à ne pas modifier la partie étendue PCE du registre PC par le contenu du registre 13.

Par ailleurs, si l'on souhaite, à partir d'un programme conçu pour le microprocesseur selon l'invention, appeler un sous-programme écrit pour un microprocesseur ne comportant pas de moyens d'accès à un espace adressable étendu, ce sous programme se trouvant en zone mémoire basse 2a, il suffit d'utiliser l'instruction CALLF avec une adresse de sous-programme sur 24 bits dont l'octet étendu est à 0. De cette manière, le multiplexeur 16 est commandé de manière à ce que la partie étendue 21 du registre PC soit mise à 0 à partir du registre 13.

La.description qui précède a décrit un exemple dans lequel le bus d'adresse 4 du microprocesseur est porté de 16 à 24 bits. Bien entendu, on peut prévoir tout autre taille de bus d'adresse, par exemple 20 ou 32 bits, sans pour autant sortir du cadre de l'invention telle que définie par les revendications annexées.

## Revendications

1. Microprocesseur comprenant une unité de traitement (1), des moyens de connexion et d'accès à un espace mémoire (2) adressable, et des moyens pour exécuter les instructions d'un jeu d'instructions comprenant des instructions d'accès à l'espace mémoire, **caractérisé en ce que** l'espace mémoire comprend une zone mémoire basse (2a) et une zone mémoire étendue (2b), **en ce que** le jeu d'instructions comprend un premier ensemble d'instructions comportant des instructions d'accès à la zone mémoire basse (2a), et un second ensemble d'instructions, distinct du premier ensemble d'instructions, et regroupant toutes les instructions donnant accès à la zone mémoire étendue du jeu d'instructions, et **en ce que** le microprocesseur comprend des moyens pour empêcher tout accès à la zone mémoire étendue tant que le microprocesseur exécute des instructions du premier ensemble d'instructions.

2. Microprocesseur selon la revendication 1, **caractérisé en ce que** chaque emplacement de l'espace mémoire est associé à une adresse respective d'accès, et **en ce que** le microprocesseur comprend des moyens pour forcer l'adresse d'un emplacement à accéder pour que celle-ci pointe sur un emplacement de la zone mémoire basse (2a), lors de l'exécution d'instructions du premier ensemble d'instructions.

3. Microprocesseur selon l'une des revendications 1 et 2, **caractérisé en ce que** le second ensemble d'instructions comprend uniquement des instructions de saut et d'appel de sous-programme à un emplacement mémoire quelconque de l'ensemble de l'espace mémoire (2), et des instructions de transfert de données entre un emplacement mémoire quelconque de l'ensemble de l'espace mémoire (2) et un registre interne prédéfini du microprocesseur.

4. Microprocesseur selon l'une des revendications 1 à 3, **caractérisé en ce que** chaque emplacement de l'espace mémoire est associé à une adresse respective d'accès, et **en ce que** pour l'exécution d'instructions de saut ou d'appel de sous-programme du premier ensemble d'instructions, en mode d'adressage direct à partir d'un emplacement en zone mémoire basse (2a), le microprocesseur comprend des moyens pour maintenir l'adresse de l'emplacement de destination du saut pour que celle-ci pointe sur un emplacement de la zone mémoire basse.

5. Microprocesseur selon l'une des revendications 1 à 4, **caractérisé en ce que** le premier ensemble d'instructions comprend des instructions d'adressage en mode indirect pour accéder à un emplacement de la zone mémoire basse (2a), le microprocesseur comprenant des moyens pour forcer l'adresse et la valeur d'un pointeur spécifiant un accès en mode indirect pour que celui-ci soit situé en zone mémoire basse et pointe dans cette zone.

6. Microprocesseur selon l'une des revendications 1 à 4, **caractérisé en ce que** le second ensemble d'instructions comprend des instructions d'accès à la zone mémoire étendue (2b) en mode d'adressage indirect.

7. Microprocesseur selon la revendication 6, **caractérisé en ce qu'**en mode d'adressage indirect dans la zone mémoire étendue (2b), les pointeurs déterminant l'adresse de l'emplacement mémoire à accéder sont situés dans la zone mémoire basse (2a).

8. Microprocesseur selon la revendication 6 ou 7, **caractérisé en ce qu'**en mode d'adressage indirect dans la zone mémoire étendue (2b), les pointeurs déterminant l'adresse de l'emplacement mémoire à accéder sont situés dans la zone mémoire étendue(2b).

9. Microprocesseur selon l'une des revendications 1 à 8, **caractérisé en ce que** qu'il comprend un bus d'adresse (4) conçu pour accéder à l'ensemble de l'espace adressable (2), et un registre de pointeur de programme (19, 20, 21) dont la taille correspond à celle du bus d'adresse pour pouvoir accéder à une instruction de programme à exécuter située à n'importe quel emplacement de l'espace adressable (2).

10. Microprocesseur selon l'une des revendications 1 à 9, **caractérisé en ce que** la zone mémoire basse (2a) est accessible sur 16 bits et la zone mémoire étendue (2b) est accessible sur 24 bits.

## Patentansprüche

1. Mikroprozessor, der eine Verarbeitungseinheit (1), Mittel zum Anschließen und Zugreifen auf einen adressierbaren Speicherraum (2) und Mittel zum Ausführen der Anweisungen eines Satzes von Anweisungen umfasst, die Anweisungen für das Zugreifen auf den Speicherraum umfassen, **dadurch gekennzeichnet, dass** der Speicherraum eine untere Speicherzone (2a) und eine erweiterte Speicherzone (2b) umfasst, dadurch, dass der Satz von Anweisungen eine erste Einheit von Anweisungen umfasst, die die Anweisungen zum Zugang auf die untere Speicherzone (2a) umfassen, und eine zweite Einheit von Anweisungen, die von der ersten Einheit von Anweisungen getrennt ist und alle Anweisungen gruppiert, die Zugang zu der erweiterten Speicherzone des Satzes von Anweisungen geben, und dadurch, dass der Mikroprozessor Mittel umfasst, um jeden Zugang zu der erweiterten Speicherzone zu verhindern, solange der Mikroprozessor Anweisungen der ersten Einheit von Anweisungen ausführt.

2. Mikroprozessor nach Anspruch 1, **dadurch gekennzeichnet, dass** jeder Platz des Speicherraums mit einer jeweiligen Zugangsadresse verbunden ist, und dadurch, dass der Mikroprozessor Mittel umfasst, um die Adresse eines Platzes, auf den zugegriffen werden soll, zu forcieren, damit dieser während der Ausführung von Anweisungen der ersten Einheit von Anweisungen auf einen Platz der unteren Speicherzone (2a) zeigt.

3. Mikroprozessor nach einem der Ansprüche 1 und 2, **dadurch gekennzeichnet, dass** die zweite Einheit von Anweisungen nur Anweisungen zum Springen und Abrufen eines Unterprogramms an einem beliebigen Speicherplatz der Einheit des Speicherraums (2) umfasst, und Anweisungen für den Datentransfer zwischen einem beliebigen Speichersatz der Einheit des Speicherraums (2) und einem vorausbestimmten internen Register des Mikroprozessors.

4. Mikroprozessor nach einem der Ansprüche 1 bis 3, **dadurch gekennzeichnet, dass** jeder Platz des Speicherraums mit einer jeweiligen Zugangsadresse verbunden ist, und dadurch, dass der Prozessor für das Ausführen von Anweisungen zum Springen oder Abrufen eines Unterprogramms der ersten Einheit von Anweisungen im Direktadressiermodus ausgehend von einem Platz in der unteren Speicherzone (2a) Mittel umfasst, um die Adresse des Zielplatzes des Sprungs aufrechtzuerhalten, damit diese auf einen Platz der unteren Speicherzone zeigt.

5. Mikroprozessor nach einem der Ansprüche 1 bis 4, **dadurch gekennzeichnet, dass** die erste Einheit von Anweisungen Anweisungen zum Adressieren in indirektem Modus umfasst, um auf einen Platz der unteren Speicherzone (2a) zuzugreifen, wobei der Mikroprozessor Mittel umfasst, um die Adresse und den Wert eines Zeigers, der einen Zugang in indirektem Modus spezifiziert, zu forcieren, damit dieser sich in der unteren Speicherzone befindet und diese Zone zeigt.

6. Mikroprozessor nach einem der Ansprüche 1 bis 4, **dadurch gekennzeichnet, dass** die zweite Einheit von Anweisungen Anweisungen für das Zugreifen auf die erweiterte Speicherzone (2b) im indirekten Adressierungsmodus umfasst.

7. Mikroprozessor nach Anspruch 6, **dadurch gekennzeichnet, dass** im indirekten Adressiermodus in der erweiterten Speicherzone (2b) die Zeiger, die die Adresse des Speicherplatzes bestimmen, auf den zuzugreifen ist, in der unteren Speicherzone (2a) liegen.

8. Mikroprozessor nach Anspruch 6 oder 7, **dadurch gekennzeichnet, dass** im indirekten Adressierungsmodus in der erweiterten Speicherzone (2b) die Zeiger, die die Adresse des Speicherplatzes bestimmen, auf den zuzugreifen ist, in der erweiterten Speicherzone (2b) liegen.

9. Mikroprozessor nach einem der Ansprüche 1 bis 8, **dadurch gekennzeichnet, dass** er einen Adressbus (4) umfasst, der konzipiert ist, um auf den ganzen adressierbaren Raum (2) zuzugreifen, und ein Programmzeigerregister (19, 20, 21), dessen Größe der des Adressbusses entspricht, um auf eine auszuführende Programmanweisung zugreifen zu können, die sich an einem beliebigen Platz in dem adressierbaren Raum (2) befindet.

10. Mikroprozessor nach einem der Ansprüche 1 bis 9, **dadurch gekennzeichnet, dass** die untere Speicherzone (2a) auf 16 Bit zugänglich ist, und dass die erweiterte Speicherzone (2b) auf 24 Bit zugänglich ist.

## Claims

1. A microprocessor comprising a processing unit (1), means for connecting to and accessing an addressable memory space (2), and means for executing instructions from an instruction set comprising instructions for accessing the memory space, **characterized in that** the memory space comprises a lower memory area (2a) and an extended memory area (2b), **in that** the instruction set comprises a first group of instructions including instructions for accessing the lower memory area (2a) and a second instruction group, distinct from the first instruction group, gathering all of the instructions for accessing to the extended memory area in the instruction set, and **in that** the microprocessor comprises means for preventing access to the extended memory area for as long as the microprocessor executes instructions from the first instruction group.

2. The microprocessor of claim 1, **characterized in that** each location in the memory space is associated with a respective access address, and **in that** the microprocessor comprises means for forcing the address of a location to be accessed so that it points to a location in the lower memory area (2a) while executing instructions from the first instruction group.

3. The microprocessor of claims 1 and 2, **characterized in that** the second instruction group comprises only jump and routine call instructions at an arbitrary memory location in the memory space (2) as a whole, and data transfer instructions between an arbitrary memory location in the memory space (2) as a whole and a predefined internal register of the microprocessor.

4. The microprocessor of any of claims 1 to 3, **characterized in that** each location in the memory space is associated with a respective access address, and **in that**, for executing jump or routine call instructions from the first instruction group, in the direct addressing mode from a location in the lower memory area (2a), the microprocessor comprises means for maintaining the address of the jump destination location so that it points to a location in the lower memory area.

5. The microprocessor of any of claims 1 to 4, **characterized in that** the first instruction group comprises indirect mode addressing instructions for accessing a location in the lower memory area (2a), the microprocessor comprising means for forcing the address and the value of a pointer that specifies access in the indirect mode so that the latter be located in the lower memory area and points into this area.

6. The microprocessor of any of claims 1 to 4, **characterized in that** the second instruction group comprises instructions for accessing the extended memory area (2b) in the indirect addressing mode.

7. The microprocessor of claim 6, **characterized in that**, in the indirect addressing mode of the extended memory area (2b), the pointers that determine the address of the memory location to be accessed are located within the lower memory area (2a).

8. The microprocessor of claim 6 or 7, **characterized in that**, in the indirect addressing mode of extended memory area (2b), the pointers that determine the address of the memory location to be accessed are located within the extended memory area (2b).

9. The microprocessor of any of claims 1 to 8, **characterized in that** it comprises an address bus (4) designed for accessing the addressable space (2) as a whole, and a program pointer register (19, 20, 21) having a size corresponding to that of the address bus so as to enable access to a program instruction to be executed that is located at an arbitrary location in the addressable space (2).

10. The microprocessor of any of claims 1 to 9, **characterized in that** the lower memory area (2a) is accessible over 16 bits and that the extended memory area (2b) is accessible over 24 bits.
